# EUROPEAN PATENT APPLICATION

(11) **EP 2 184 690 A1**
(43) Date of publication of application: **12.05.2010**
(21) Application number: 09170390.0
(22) Date of filing: 16.09.2009
(51) Int. Cl.: G06F 17/30, G06F 21/24

(54) **Federated search system based on multiple search engines**

(30) Priority: 23.10.2008 JP 2008273552
(71) Applicant: Hitachi Software Engineering Co., Ltd., Shinagawa-ku Tokyo 140-0002 (JP)
(72) Inventor: Mizutani, Kou, Tokyo 4-12-7 (JP)
(74) Representative: Liesegang, Eva

(57) **Abstract**

Documents, which have typically been searched for using multiple search engines based on the access rights of multiple accounts on multiple authentication servers, are searched for using a single federated search engine via a single log in. A host system having an account correspondence database is provided with a function of re-indexing indexes that have been individually created with multiple search engines, so that indexes of all of the search engines are created in advance. When a search is requested, correspondence information is read from the account correspondence database, so that a document search involving the use of only the host system is executed based on all of the relevant account rights.

## Description

### BACKGROUND OF THE INVENTION

### Field of the Invention

The present invention relates to search systems. For example, it relates to enterprise search and, more particularly, to federated search based on multiple search engines.

### Background Art

In recent years, a vast number of electronic documents have been handled in ordinary enterprises. However, the fact is that considerable time is consumed in managing and searching for such documents, and document management thus has been more costly than one can imagine. Therefore, reduction of the cost for document management is currently an urgent task to be accomplished by enterprises.

Enterprise search, which has been proposed as a technique for effectively managing and searching for electronic documents, is a search system that provides a function of searching for documents within an enterprise. The use of such a technique allows an accurate and relatively fast search for desired documents. Thus, it has been increasingly introduced into enterprises.

However, it is predicted that with a further increase of electronic documents in the future, a mechanism that merges, arranges, and sorts multiple search results obtained through enterprise search (such a mechanism will be hereinafter referred to as federated search) will be required. To merge search results herein means merging search results in different formats in accordance with a predetermined rule. To arrange search results means removing duplication of identical search results, and to sort search results means sorting search results in the order specified by a user.

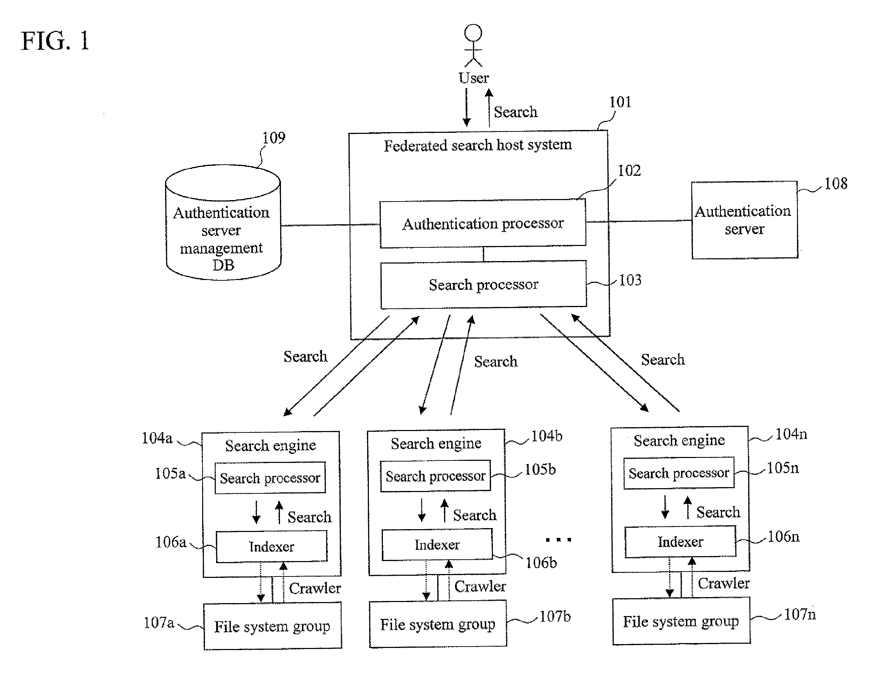

FIG. 1 illustrates the configuration of a system overview of a prior-art federated search system. The federated search system includes a host system 101 having an authentication server management DB 109 in which authentication servers are registered, an authentication server 108 that authenticates users, multiple search engines 104a, 104b,..., 104n, and multiple file system groups 107a, 107b,..., 107n in which electronic documents are actually placed. The search engines 104a, 104b,..., 104n are connected to the host system 101. The file system groups 107a, 107b,..., 107n are connected to the search engines 104a, 104b,..., 104n, respectively.

The host system 101 includes an authentication processor 102 that processes user accounts and a search processor 103 that combines search requests and search results. The search engines 104a, 104b,..., 104n include search processors 105a, 105b,..., 105n that conduct searches for electronic documents and indexers 106a, 106b,..., 106n in which data on the file systems are accumulated, respectively.

In such a federated search system, once the host system 101 receives user authentication information as well as a search query from a user, the authentication processor 102 executes authentication with the registered authentication server 108. If the authentication is successful, the search processor 103 creates a customized query for each of the search engines 104a, 104b,..., 104n. The query created at this time includes authority information of the user who requested a search. Using the query, the host system 101 requests each of the search engines 104a, 104b,..., 104n to execute a search, and waits for a response. The search processors 105a, 105b,..., 105n of the search engines 104a, 104b,..., 104n cause the indexers 106a, 106b,..., 106n to execute, based on the authority information contained in the query, a search for only a document to which the relevant account has the right of access (i.e., the access right or also referred to as a "read right" or "reference right"). The authentication processor 102, upon receiving search results from all of the search engines 104a, 104b,..., 104n, merges, arranges, and sorts the search results, and sends a reply to the user.

The indexers 106a, 106b,..., 106n of the search engines 104a, 104b,..., 104n periodically check the update status of the file systems. When any change has occurred, the indexers 106a, 106b,..., 106n will attempt to recreate search indexes so as to always provide the latest search results.

The aforementioned federated search system is disclosed in, for example, Reference 1 (JP Patent Publication (Kokai) No. 2002-245039 A).

### SUMMARY OF THE INVENTION

When operation patterns of document management within an enterprise are considered, it is not necessarily the case that personal authentication within the enterprise is carried out with only one kind of authentication server. In addition, each search engine cannot be used exclusively for federated search and is presumed to be used by many users in various ways.

Meanwhile, in an enterprise in which multiple authentication servers are operated, a case is considered in which one user has multiple accounts for different authentication servers, and each file system has individual access rights for different authentication servers.

However, in the prior-art federated search, a user can search for only a document to which a single account has the right of access at a single search. If a document to which another account has the right of access is to be searched for, the user has to log out and log into another account so as to execute a search again.

In addition, in the prior-art federated search, all of the search engines are forced to execute search processing each time a search is requested. Thus, the load on each search engine will be increased in proportion to the number of searches executed.

Further, a processing program used for the prior-art federated search has to wait for the completion of searches executed by all of the search engines in order to obtain search results. Since such a processing program creates a search query and merges, arranges, and sorts search results each time it executes a search, the load on the system will be increased in the condition in which a number of searches are concurrently executed.

Due to the aforementioned factors, the advantages of the enterprise search that is supposed to provide a fast search have been spoiled.

The present invention has been made in view of the foregoing, and provides user-friendly federated search that can reduce the load on search engines.

The present invention provides a search system according to claim 1 and a method of search processing according to claim 7. Preferred embodiments of the invention are defined in the dependent claims.

In order to solve the aforementioned problems, according to the present invention, a table that integrates multiple accounts on multiple authentication servers is provided and information on accounts that have been authenticated in advance are stored in the table. Thereafter, once one of the accounts is authenticated, documents to which all of the relevant accounts have the right of access can be searched for.

In addition, according to the present invention, an XML metadata file of a document obtained as a result of periodically crawling a search engine with a dedicated crawler is converted into a unified format, so that re-indexing is performed. When a search is requested, each of the actual search engines is not searched each time the search is requested, but a search is executed only for the index information consolidated from each of the search engines, whereby federated search based on all of the registered search engines is conducted.

That is, a search system of the present invention includes a host computer, multiple authentication servers, and multiple search engines each connected to at least one of multiple file system groups. The host computer includes an authentication processor that performs, for the multiple authentication servers, authentication processing of a user requesting a search, and a search processor that performs, with reference to the search request of the user, search processing for index information on the multiple file system groups acquired from the multiple search engines. Upon login of the user requesting the search, the authentication processor identifies, with reference to management information that manages account information of all of registered users on the multiple authentication servers, all of the authentication servers on which the user requesting the search has an account. The search processor performs the search processing for index information corresponding to the file system groups associated with the identified authentication servers.

The host computer further includes an indexer in which the index information on the multiple file system groups is collectively stored.

Each of the multiple search engines updates index information on the corresponding file system group at a given timing to create updated index information. The indexer sends to the search engine a crawler instructing transmission of the updated index information, and the index information stored in the indexer is updated with the updated index information that is sent back from the search engine in response to the crawler.

The indexer has stored therein the index information created in a unified format. When any of the multiple search engines has/have stored therein the updated index information in a format different from the unified format, one of the indexer and the relevant search engine converts the updated index information into a unified format.

Further, the indexer refers to search engine management information that manages an update history of the index information of the multiple search engines, and identifies a search engine that has the least recently updated index information or a search engine having index information that has never been updated, and then sends the crawler to the identified search engine.

Further features of the present invention will become apparent from the following preferred embodiment for implementing the present invention and the accompanying drawings.

According to the federated search of the present invention, once a user has logged into a single account, he/she can exercise the access rights of all of his/her accounts. Thus, a high degree of usability is achieved. In addition, searches can be executed without burdening the search engines.

### BRIEF DESCRIPTION OF THE DRAWINGS

In the accompanying drawings:
FIG. 1 is a schematic configuration diagram of a prior-art federated search system;
FIG. 2 is a block diagram illustrating the schematic configuration of an integrated enterprise search system in accordance with an embodiment of the present invention;
FIG. 3 illustrates an exemplary data structure of an authentication server management DB;
FIG. 4 illustrates an exemplary data structure of an account correspondence management DB;
FIG. 5 illustrates an exemplary data structure of a search engine management DB;
FIG. 6 illustrates an internal configuration of a search engine;
FIG. 7 is a flowchart illustrating the procedures of creating account correspondence with an authentication processor;
FIG. 8 is a flowchart illustrating the procedures from login to search of the integrated enterprise search;
FIG. 9 is a flowchart illustrating the procedures of creating indexes with indexers; and
FIG. 10 illustrates an exemplary conversion of a metadata XML though an XSLT.

### DESCRIPTION OF SYMBOLS

- 1: host system
- 2: authentication processor
- 3: search processor
- 4: indexer
- 5a to 5n: search engines
- 6a to 6n: file system groups
- 7: search engine DB
- 8a to 8m: authentication server
- 9: authentication server management DB
- 10: account correspondence management DB

### DETAILED DESCRIPTION OF THE PREFERRED EMBODIMENTS

Hereinafter, an integrated enterprise search system (a retrieval system) in accordance with the embodiment of the present invention will be described with reference to the accompanying drawings. It should be noted that the embodiment described hereinafter is illustrative only for the purpose of implementing the present invention, and is not intended to limit the technical scope of the present invention. In addition, structures common to all of the drawings are denoted by common reference numerals.

First, the structure of an integrated enterprise search system and the like will be described, and then, the operation of such a system will be described with reference to a flowchart.

### <System Configuration>

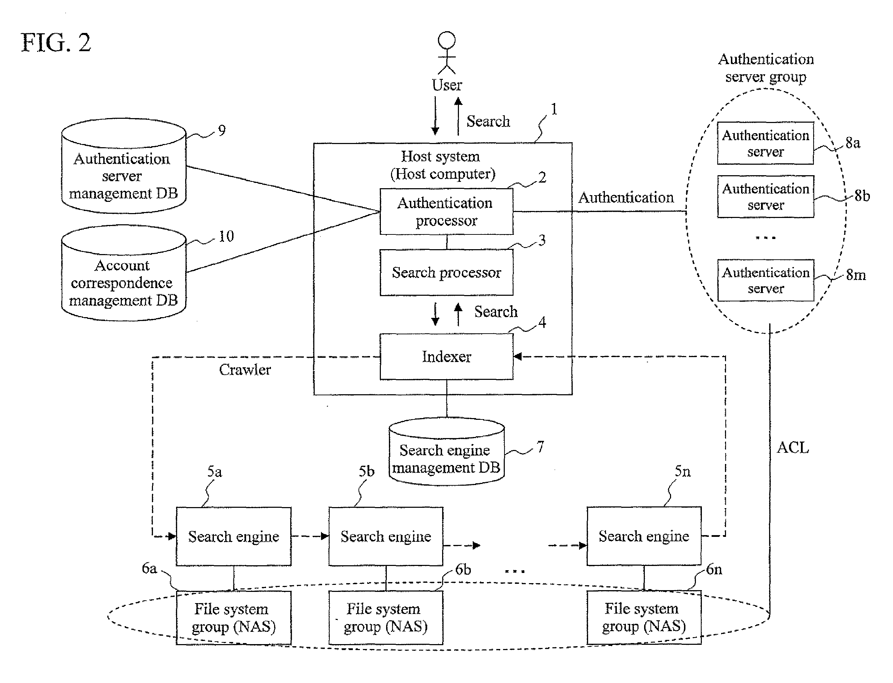

FIG. 2 is a block diagram illustrating the schematic configuration of an integrated enterprise search system (a retrieval system) in accordance with the present embodiment. The integrated enterprise search system includes a host system 1 that includes an authentication server management DB 9, an account correspondence management DB 10, and a search engine management DB 7; multiple search engines 5a, 5b,..., 5n for enterprise search that are connected to the host system 1; file system groups 6a, 6b,..., 6n connected to the respective search engines; and authentication servers 8a, 8b,..., 8m connected to the host system 1 as well as to each file system of the file system groups 6a, 6b,..., 6n.

The host system 1 includes an authentication processor 2 that mainly performs authentication-related processing, a search processor 3 that performs search-related processing, and an indexer 4 that issues crawlers to acquire metadata from each file system group and performs indexing processing. The issued crawlers are sent to the search engines 5a to 5n. The search engines 5a to 5n that have received the crawlers return metadata as the index information on each file system to the indexer 4 (the details will be described later).

Electronic documents to be searched for are actually placed in the file system groups 6a, 6b,..., 6n. The search engines 5a, 5b,..., 5n share documents based on access rights according to a file sharing protocol such as NFS or CIFS.

Separately from the indexer 4 of the host system 1, each search engine individually performs the process of indexing the file systems so that search information is always kept up-to-date. Information to be indexed includes not only the basic information such as a document name and size, but also an access control list (ACL) of the file sharing protocol. The search processor 3 realizes a document search with the addition of the access rights based on the ACL information.

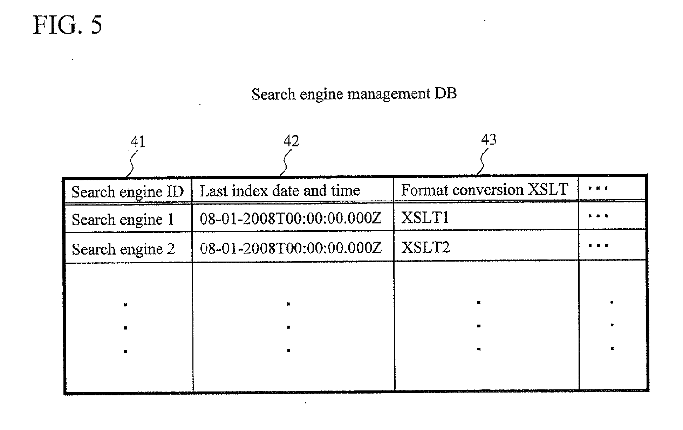

In the search engine management DB 7, registration information of each search engine (see FIG. 5) is stored. The indexer 4 of the host system 1 determines a search engine to be crawled based on the information of the search engine management DB 7.

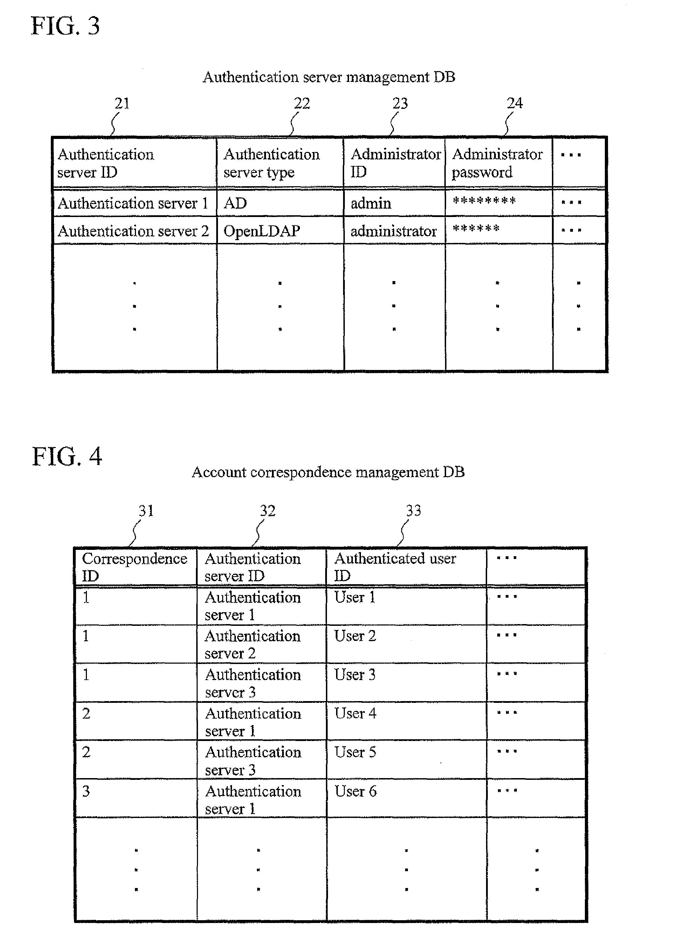

In the authentication server management DB 9, information about the connection of the multiple authentication servers 8a, 8b,..., 8m that manage accounts (see FIG. 3) is stored. Examples of authentication servers include NIS servers and LDAP servers. The aforementioned ACL of the file sharing protocol for the file system groups 6a, 6b,..., 6n are created based on the accounts on such authentication servers.

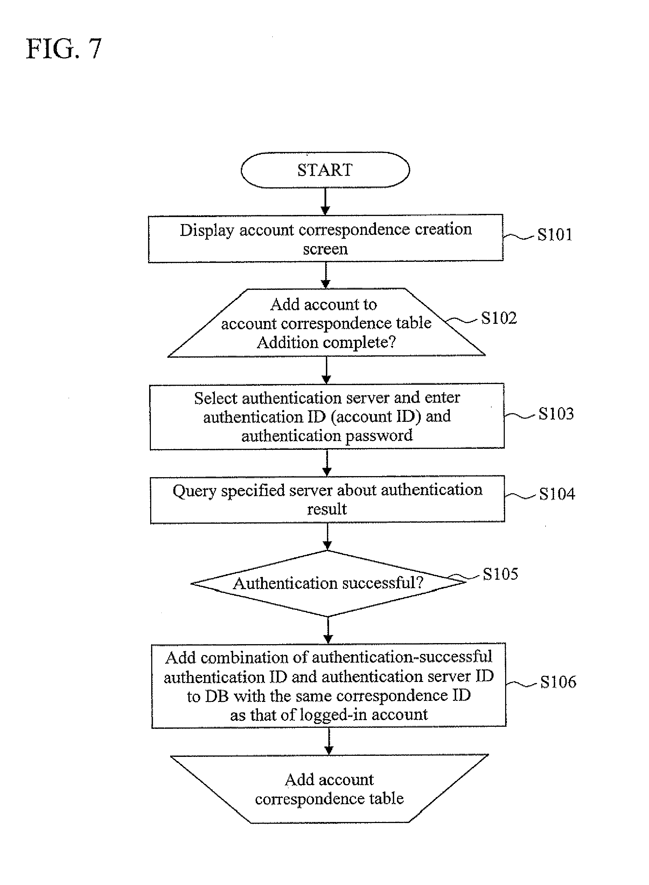

In the account correspondence management DB 10, information for establishing the correspondence of the account information on multiple authentication servers (information indicative of the correspondence between authentication servers, users, and user accounts (see FIG. 4)) is stored. A user, before conducting a search, gets all of his/her account information to be associated in advance. The association processing will be described later with reference to a flowchart of FIG. 7. Such correspondence information is stored in the account correspondence management DB 10, and will be called when a search is requested. A user logs in with one of his/her accounts belonging to the correspondence, and requests a search. Then, the authentication processor 2 of the host system 1 acquires the correspondence information so that files to which all of the accounts belonging to the same correspondence ID have the right of access are searched for.

### <Data Structure of Authentication Server Management DB>

FIG. 3 illustrates an exemplary data structure of the authentication server management DB 9. In FIG. 3, an authentication sever ID column 21 indicates the values that uniquely identify authentication servers. Examples of such values include IP address and host names. In an authentication server type column 22, the types of authentication servers are registered as the name suggests. Examples of authentication servers include Active Directory (registered trademark of Microsoft Corporation) and OpenLDAP. The authentication processor 2 of the host system 1 supports a means of communication with such authentication servers.

An administrator ID column 23 and an administrator password column 24 are columns in which the ID and password, respectively, of an administrator of each authentication server are stored, and such columns are used by the authentication processor 2 for logging into the authentication server.

### <Data Structure of Account Correspondence Management DB>

FIG. 4 illustrates an exemplary data structure of the account correspondence management DB 10. In FIG. 4, a correspondence ID column 31 indicates the number that manages one-by-one correspondence, and the same correspondence ID is assigned to accounts (authenticated user ID 33) that belong to the same correspondence. When a user logs in with his/her account that belongs to some correspondence and conducts a search, all of the account rights that have the same correspondence ID as the logged-in account are validated. For example, provided that a user 1 (account 1) belonging to an authentication server 1 and a user 2 (account 2) belonging to an authentication server 2 have the identical correspondence ID 1, if the user 1 logs in and conducts a search, files that can be accessed (i.e., read or referred to) by the user 2 are also hit.

In an authentication server ID column 32, the values that identify authentication servers (for example, IP address or host names) are stored. In an authenticated user ID column 33, authentication IDs of the relevant authentication servers are stored.

Each row indicates an account that is included in a single correspondence, and is created when an initial logged-in account adds another account via another authentication server. Thus, the same account will never belong to different correspondences at the same time.

### <Data Structure of Search Engine Management DB>

FIG. 5 illustrates an exemplary data structure of the search engine management DB 7. In FIG. 5, a search engine ID column 41 indicates the values that uniquely identify search engines. Examples of such values include IP address and host names.

In the last index date and time column 42, the last date and time at which the indexer 4 of the host system 1 performed indexing are stored.

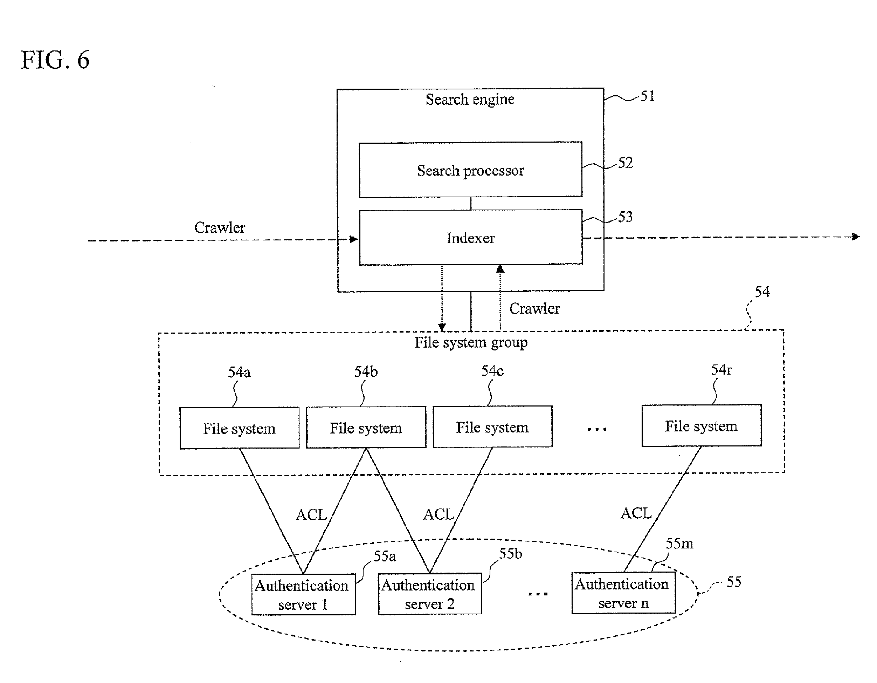

In a format conversion XSLT column 43, an XSLT code for converting an XML of metadata specific to each search engine into a metadata XML in a unified format is stored. The indexer 4 of the host system 1 issues crawlers containing XSLT codes, and sequentially dispatches such crawlers to the search engines. An indexer 53 of each search engine (see FIG. 6) that has received the crawler uses the XSLT code contained in the crawler to convert the XML of the metadata specific to the search engine into an XML in a unified format. It should be noted that the XSLT code is created by the administrator and is registered at the same time as the registration of each search engine in the search engine management DB.

### <Internal Configuration of Search Engine>

FIG. 6 illustrates the specific internal configuration of each of the search engines 5a, 5b,..., 5n in FIG. 2. A search engine 51 is a typical enterprise search engine including a search processor 52 that mainly performs search processing and an indexer 53 that mainly performs indexing processing.

The search engine 51 is connected to each of file systems 54a, 54b, 54c,..., 54r of a file system group 54. Each file system is associated with one or more of authentication servers 55a, 55b,..., 55m among authentication servers 55. It should be noted that the number of the authentication servers that are associated with a single file system may be more than one. For example, the file system 54b may be associated with the authentication servers 55a and 55b. In that case, the access right to the file system 54b is, when a user has logged into the authentication server 55a, based on the ACL of the authentication server 55a, and when a user has logged into the authentication server 55b, based on the ACL of the authentication server 55b.

The indexer 53 of the search engine 51 periodically performs crawling processing to the file system group 54 in accordance with the update status of each file system. Metadata on documents obtained as a result of the crawling processing is sequentially indexed by the indexer 53. The indexed metadata includes typical attributes such as a document name, path, and size as well as the ACL of the authentication server.

Separately from the indexing processing individually performed by each search engine, the indexer 4 of the host system 1 also periodically updates the index information of each of the registered search engines. When a crawler is dispatched to each search engine from the indexer 4, the indexer 53 of each search engine transfers differential metadata of the accumulated indexes, in an XML format, to the indexer 4 of the host system 1. The metadata transferred at this time may not always be in a format that can be directly indexed by the indexer 4. This is because, the name or indexed item of metadata varies between each of the search engines. Thus, the indexer 53 of each search engine, upon receiving a crawler, converts the metadata XML into a format that can be analyzed by the indexer 4 of the host system 1 by means of the XSLT registered in each search engine. The XSLT is registered in the search engine management DB concurrently with the registration of the relevant search engine in the system. The crawler contains information on the XSLT of each search engine that is the dispatch destination of the crawler.

### <Account Correspondence Creation Process>

FIG. 7 is a flowchart illustrating the overview of the account correspondence creation processing for each of the multiple authentication servers. First, when a user logs in with his/her main account, the authentication processor 2 displays an account correspondence addition screen in response to the request (step S101). This screen includes a list of authentication servers that are currently registered in the system as well as the entry fields of the authentication IDs (account IDs) and passwords.

If the user instructs addition of a new account to his/her own account correspondence (step S102), the authentication processor 2 prompts the user to enter his/her account other than the account used for the login purpose in the entry field, and accepts the entry (step S103).

Next, the authentication processor 2, based on the entered information of the user, queries the relevant authentication server about whether the account is eligible for authentication (step S104). If the authentication is successful (step S105), the authentication processor 2 stores the new account with the same correspondence ID as that of the user's account used for the login purpose (step S106). If the authentication is unsuccessful, the account is not stored. Such processing is repeated.

It should be noted that the record of the user's account used for login purpose is automatically created in the DB at the initial login time, and the correspondence ID is also automatically numbered, starting from a previously-unused number.

### <Processing from Login to Search>

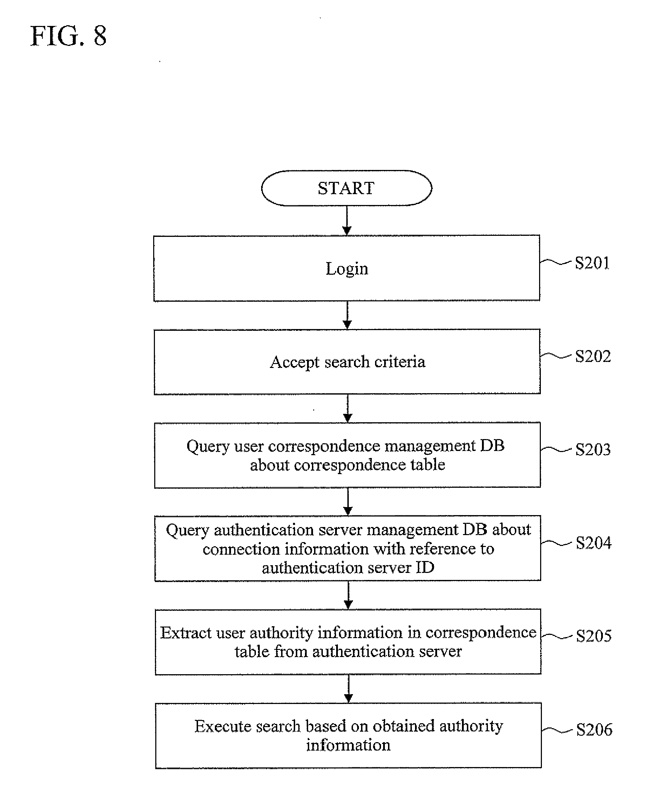

FIG. 8 is a flowchart illustrating the processing flow of the integrated enterprise search, from login to search. First, the host system 1 accepts login of a user (step S201) as well as the entry of search criteria (step S202). Then, the authentication processor 2 queries the account correspondence management DB 10 about a correspondence table with reference to the authentication server ID and the authentication ID, and acquires information on another (other) authentication server(s) (authentication server ID(s)) to which the identical user has the right to access (step S203). At this point of time, the host system 1 is connected only to the logged-in authentication server.

Next, the authentication processor 2, based on the authentication server ID of the correspondence table, queries the authentication server management DB 9 about information on whether the host system 1 is connected to the relevant authentication server (step S204).

After the connection to the corresponding authentication server is established, the authentication processor 2 extracts the account authority information with reference to the authentication ID of the account (step S205). Examples of the authority information include information on the unique identifier (UID) and the group identifier (GID). At this stage, the user is allowed to access all of the authentication servers on which the user has an account.

Finally, the search processor 3 embeds the authority information on each of the obtained accounts into a search query, and submits a search to the indexer 4 (step S206).

### <Indexing Processing>

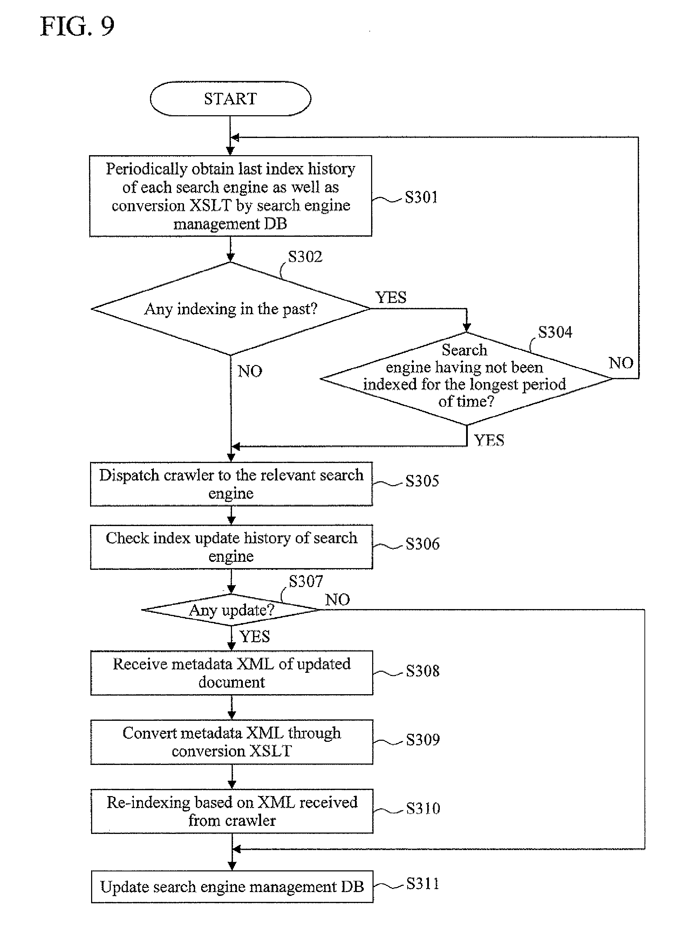

FIG. 9 is a flowchart illustrating the indexing processing of the indexer 4 of the host system 1. The indexer 4 periodically refers to the last index date and time of the search engine management DB 7 (step S301). Then, the indexer 4 checks if there has been no index update even once in the past (step S302). If indexing processing has been performed in the past, the flow proceeds to step S304, and if not, the flow proceeds to step S306.

In addition, the indexer 4 determines if the relevant search engine is the one that has not been updated for the longest period of time among the search engines (step S304). If the search engine is the one that has not been updated for the longest period of time, the flow proceeds to step S305, and if not, the flow proceeds to step S301.

Then, the indexer 4 dispatches a crawler to the relevant search engine (step S305). It should be noted that all of the connection information on the search engine that is required for dispatching a crawler such as IP address are stored in the search engine management DB. In addition, the crawler includes information about the last index history.

The indexer 53 of the search engine that is the dispatch destination of the crawler acquires the crawler, and determines, with reference to the index history included in the crawler, if the index in the search engine has been updated since the previous dispatch of a crawler (step S306). The determination result is sent to the indexer 4 from the indexer 53.

If there has been no update since the previous dispatch of a crawler (step S307), the indexer 4 updates the last index date and time of the search engine management DB 7, and terminates the process (step S311). Meanwhile, if there has been any update (step S307), the indexer 4 receives from the indexer 53 differential metadata of the updated index portion in an XML format (step S308). Further, the indexer 4, with reference to the format conversion XSLT file (code) acquired from the search engine management DB 7, converts the XML file of the differential metadata of the updated index portion into an XML file in a unified format (step S309).

Next, the indexer 4 performs re-indexing processing with the use of the newly acquired metadata XML file in the unified format (step S310).

Upon completion of the re-indexing processing, if the answer to step S307 is NO, or if the answer to step S304 is NO, the indexer 4 updates the last index date and time of the search engine management DB 7 (step S311).

Although the indexer 4 converts the differential metadata into an XML file in a unified format in the process of FIG. 9, it is also possible to provide a configuration in which the differential metadata is sent to the indexer 4 of the host system 1 after it is converted into an XML in a unified format with the indexer 53 of each search engine that has received a crawler. In that case, the crawler should made to contain the format-conversion XSLT file of each search engine or the format-conversion XSLT file should be noticed by a different method. <XML before and after the Conversion>

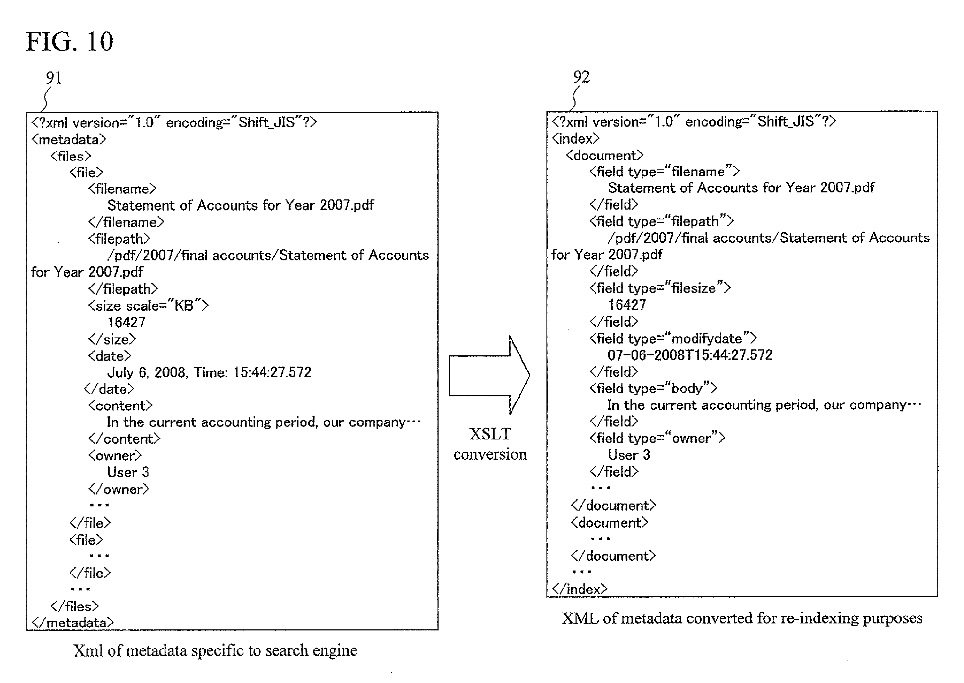

FIG. 10 illustrates an example of a metadata XML (before conversion) obtained from a search engine and an XML (after conversion) obtained by converting such a metadata XML into a re-indexable unified file using a conversion XSLT code.

An XML 91 of metadata specific to a search engine represents a metadata XML obtained as a result of crawling a specific document through a given search engine. An XML 92 of metadata converted for re-indexing purposes represents an XML that is obtained by converting the XML 91 using the aforementioned XSLT code specific to the search engine.

In this example, information such as a file name, file path, size, date and time of change, content, and the owner of the file is represented in an XML format as metadata on the document "Statement of Accounts for Year 2007.pdf." In the XML 91 of the metadata specific to the search engine, each metadata is represented by the element of filename, filepath, date, content, owner, and.... However, since the name of each element is specific to each search engine, there is no guarantee that the indexer 4 of the host system 1 is capable of correctly analyzing the XML and execute indexing. This is because, if the file name is represented by the content of the filename element, for example, it cannot be judged by the indexer 4.

The XML 92 obtained through conversion is a metadata XML in a format that is indexable by the indexer 4 of the host system 1. The indexer 4 is capable of re-indexing the indexes of the search engine with reference to such a file.

### <Conclusion>

According to the present embodiment, a user, when logging in, identifies, with reference to management information that manages account information of all of the registered users on multiple authentication servers, all of the authentication servers on which the logged-in user has an account. Then, search processing is executed for the index information corresponding to the file system groups associated with the identified authentication servers. Accordingly, it is possible, via a single login, to search for documents to which all of the accounts that have been associated in advance have the right of access. Accordingly, the user can save the effort of logging in with another account and conducting a search again.

In addition, index information on multiple file system groups is collectively managed at a single point. Accordingly, it is possible to eliminate the need for a host computer to acquire a search result of each search engine each time a search is requested, and thus the load on the system can be reduced. Further, search latency time of each search engine can be saved.

Each of the multiple search engines updates index information on the corresponding file system group at a given timing to create updated index information. In addition, a crawler indicative of transmission of the updated index information is sent from a host computer (indexer) to the search engine, so that the index information stored in the indexer is updated with the updated index information that is sent back from the search engine in response to the crawler. Accordingly, the index information can be effectively updated.

It should be noted that the host computer (indexer) has stored therein index information created in a unified format. When any of multiple search engines has/have stored therein updated index information in a format different from the unified format, one of the indexer and the relevant search engine converts the updated index information into a unified format. Accordingly, it is possible to eliminate the operation of merging, arranging, and sorting search results of the search engines each time a search is executed. Thus, the load on the system can be reduced.

Furthermore, the indexer refers to the search engine management information that manages the update history of index information of the multiple search engines, and identifies a search engine that has the least recently updated index information or a search engine having index information that has never been updated, and then sends a crawler to the identified search engine.

It should be noted that the present invention can also be realized by a program code of software that implements the functions of the embodiment. In such a case, a storage medium having recorded thereon the program code is provided to a system or an apparatus, and a computer (or a CPU or an MPU) in the system or the apparatus reads the program code stored in the storage medium. In this case, the program code itself read from the storage medium implements the functions of the aforementioned embodiment, and the program code itself and the storage medium having stored therein the program code constitute the present invention. As the storage medium for supplying such a program code, for example, a flexible disk, CD-ROM, DVD-ROM, hard disk, optical disk, magneto-optical disk, CD-R, magnetic tape, nonvolatile memory card, ROM, or the like is used.

Further, based on an instruction of the program code, an OS (operating system) running on the computer or the like may perform some or all of actual processes, and the functions of the aforementioned embodiment may be implemented by those processes. Furthermore, after the program code read from the storage medium is written to the memory in the computer, the CPU or the like of the computer may, based on the instruction of the program code, perform some or all of the actual processes, and the functions of the aforementioned embodiments may be implemented by those processes.

Moreover, the program code of the software that implements the functions of the embodiment may be distributed via a network, and thereby stored in storage means such as the hard disk or the memory in the system or the apparatus, or the storage medium such as a CD-RW or CD-R, and at the point of use, the computer (or the CPU or the MPU) in the system or the apparatus may read the program code stored in the aforementioned storage means or the aforementioned storage medium and execute the program code.

## Claims

1. A search system comprising:
a host computer;
multiple authentication servers; and
multiple search engines each connected to at least one of multiple file system groups,
wherein:
the host computer includes an authentication processor adapted to perform, for the multiple authentication servers, authentication processing of a user requesting a search, and a search processor adapted to execute, with reference to the search request of the user, search processing for index information on the multiple file system groups acquired from the multiple search engines,
upon login of the user requesting the search, the authentication processor is adapted to identify, with reference to management information that manages account information of all of registered users on the multiple authentication servers, all of the authentication servers on which the user requesting the search has an account, and
the search processor is adapted to perform the search processing for index information corresponding to the file system groups associated with the identified authentication servers.

2. The search system according to claim 1, wherein the host computer further includes an indexer in which the index information on the multiple file system groups is collectively stored.

3. The search system according to claim 2, wherein:
each of the multiple search engines are adapted to update index information on the corresponding file system group at a given timing to create updated index information, and
the indexer is adapted to send to the search engine a crawler instructing transmission of the updated index information, and the index information stored in the indexer is updated with the updated index information that is sent back from the search engine in response to the crawler.

4. The search system according to claim 2 or 3, wherein the indexer has stored therein the index information created in a unified format.

5. The search system according to claim 4, wherein, when any of the multiple search engines has/have stored therein the updated index information in a format different from the unified format, one of the indexer and the relevant search engine is adapted to convert the updated index information into a unified format.

6. The search system according to claim 4 or 5, wherein the indexer is adapted to refer to search engine management information that manages an update history of the index information of the multiple search engines, and to identify a search engine that has the least recently updated index information or a search engine having index information that has never been updated, and then to send the crawler to the identified search engine.

7. A method of search processing in a search system, the search system comprising:
a host computer; multiple authentication servers; and multiple search engines each connected to at least one of multiple file system groups, wherein the method comprises the steps of:
performing, for the multiple authentication servers, authentication processing of a user requesting a search, and executing, with reference to the search request of the user, search processing for index information on the multiple file system groups acquired from the multiple search engines,
upon login of the user requesting the search, identifying, with reference to management information that manages account information of all of registered users on the multiple authentication servers, all of the authentication servers on which the user requesting the search has an account, and
performing the search processing for index information corresponding to the file system groups associated with the identified authentication servers.

8. The method of search processing according to claim 7, wherein the host computer further includes an indexer in which the index information on the multiple file system groups is collectively stored.

9. The method of search processing according to claim 8, wherein:
each of the multiple search engines updates index information on the corresponding file system group at a given timing to create updated index information, and
the indexer sends to the search engine a crawler instructing transmission of the updated index information, and the index information stored in the indexer is updated with the updated index information that is sent back from the search engine in response to the crawler.

10. The method of search processing according to claim 8 or 9, wherein the indexer stores the index information created in a unified format.

11. The method of search processing according to claim 10, wherein, when any of the multiple search engines has/have stored therein the updated index information in a format different from the unified format, one of the indexer and the relevant search engine converts the updated index information into a unified format.

12. The method of search processing according to claim 10 or 11, wherein the indexer refers to search engine management information that manages an update history of the index information of the multiple search engines, and identifies a search engine that has the least recently updated index information or a search engine having index information that has never been updated, and then sends the crawler to the identified search engine.
